# EUROPEAN PATENT SPECIFICATION

(11) **EP 2 504 179 B1**
(45) Date of publication and mention of the grant of the patent: **22.10.2014**
(21) Application number: 09851541.4
(22) Date of filing: 23.11.2009
(51) Int. Cl.: B60C 11/00, B60C 11/11, B60C 11/12, B60C 11/13, B60C 11/03

(54) **TIRE WITH A LATERAL GROOVE HAVING A CHAMFER FOR IMPROVED SNOW PERFORMANCE**
REIFEN MIT SEITENRILLE MIT ABKANTUNG FÜR VERBESSERTE LEISTUNG AUF SCHNEE
PNEU À RAINURE LATÉRALE AYANT UN CHANFREIN POUR UNE PERFORMANCE SUR NEIGE AMÉLIORÉE

(43) Date of publication of application: 03.10.2012
(73) Proprietor: MICHELIN Recherche et Technique S.A., 1763 Granges-Paccot (CH); Compagnie Générale des Etablissements Michelin, 63000 Clermont-Ferrand (FR)
(72) Inventor: GUICHON, Cyril, 63560 Beauregard-Vendon (FR)
(74) Representative: Dossmann, Gérard
(86) International application number: PCT/US2009/065521
(87) International publication number: WO 2011/062595

(56) References cited:
- JP-A- 2 141 310
- US-A- 6 000 450
- US-A1- 2002 053 382
- US-A1- 2007 000 590
- US-B1- 6 336 485
- US-B1- 6 467 517
- US-B1- 6 796 347
- US-B2- 6 640 858
- US-B2- 6 840 296

## Description

### BACKGROUND OF THE INVENTION

### Field of the Invention

This invention relates generally to tires that are configured for improved snow performance, and, more specifically, to a tire having one or more lateral grooves with a predetermined width, each of which having one or more chamfers for improved snow performance.

### Description of the Related Art

It is commonly known that when designing the sculpture or tread of a tire it is difficult to increase dry braking performance and snow traction performance simultaneously. Typically, adding features to the tread or sculpture of a tire that improve snow traction will not increase the dry braking performance of the tire. Conversely, adding features to the sculpture or tread of a tire that improve the dry braking performance usually will not lead to an increase in the performance of the tire in snow traction.

Of course, many tires are sold and used in regions of the world where dry traction is the most important performance criteria for part of the year, in summer for example, while snow traction and handling is the most important performance criteria for another part of the year, in winter for example. One solution to this paradox is for the user to install tires on their vehicle in the spring that are particularly well suited for summertime and that have good dry braking performance and to install another set of tires in the fall on the vehicle that are equally well suited for wintertime and that have good snow traction performance. However, this necessitates the purchase of two sets of tires which can be a cost prohibitive solution for many users. Accordingly, it has become common for a user to purchase "all season" tires that simultaneously have the best dry braking performance and snow traction performance as possible.

Unfortunately, the difficulty in increasing these performances simultaneously as mentioned earlier has stymied further improvements to both these performances on all season tires. Previous attempts to improve both performances concurrently have involved the use of specialized tire architecture that either increases the cost of the tires.

Accordingly, it is desirable to find a technology that optimizes both the dry braking and snow traction performances of a tire so that the performances available in summer or winter tires can be found in all season tires. Furthermore, it would be advantageous if this technology used features that are typically found in the tread or sculpture of a tire to avoid adding more cost or complexity to the tire.

JP-A-02-141310 discloses a tire showing the features of the preamble of claim 1.

### SUMMARY OF THE INVENTION

Particular embodiments of the present invention include a tire with improved snow traction that has lateral and circumferential directions and includes a tread with a circumference and at least one lateral groove located thereon. The groove has at least one chamfer found where the groove intersects the circumference of the tire, said groove having a predetermined depth and width and sidewalls having predetermined draft angles. The width of the groove ranges from approximately 2 to 4 mm and preferably from approximately 2.6 to 3.6 mm. In some cases, the width of the groove is approximately 3 mm.

In other embodiments, the chamfer forms approximately a 45 degree angle with the tangent of the circumference of the tire. In such a case, the depth and width of the chamfer could be 1.5 mm. In other cases, the depth of the groove could be approximately 7 mm.

Sometimes, the groove comprises a second chamfer that is opposite of the first chamfer. Also, the circumference of the tire may have a plurality of lateral grooves found on it, each having one or two chamfers.

In other situations, the lateral groove or grooves may follow a straight path. In such a case, the angle the grooves form with the lateral direction of the tire may range approximately from 0 to 45 degrees. In some cases, the draft angles of the sidewalls range from 0 to 15 degrees.

In some embodiments, the tread of the tire further comprises circumferential grooves that together with lateral grooves define a plurality of tread blocks that have a length of approximately 35 mm in the circumferential direction of the tire. In such embodiments, the tread blocks may have four sipes on them that are each spaced approximately 7 mm from either another sipe or a lateral groove in the circumferential direction of the tire.

In some cases, the size of the tire may be 245/45R17.

The foregoing and other objects, features and advantages of the invention will be apparent from the following more detailed descriptions of particular embodiments of the invention, as illustrated in the accompanying drawing wherein like reference numbers represent like parts of the invention.

### BRIEF DESCRIPTION OF THE DRAWINGS

FIG. 1 is a perspective view showing a tire with lateral grooves having chamfers according to an embodiment of the present invention with the lateral or axial, circumferential and radial directions of the tire also being shown;
FIG. 2 is an enlarged fragmentary view of the tread block of the center rib as defined by the circumferential and lateral grooves of the tire of FIG. 1;
FIG. 3 is a top view of the tire of FIG. 2 showing the angle the lateral grooves form with the lateral or axial direction of the tire;
FIG. 4A is a side cross-sectional view of the lateral groove of the tire of FIG. 3 taken along line 4A-4A thereof;
FIG. 4B is an enlarged view of one of the lateral grooves of the tire of FIG. 4A showing the angle the chamfer makes with the tangent of the circumference of the tire;
FIG. 4C is an enlarged view of another of the lateral grooves of the tire of FIG. 4A showing the depth and width of the chamfers of the lateral groove;
FIG. 4D is an enlarged view of a third lateral groove of the tire of FIG. 4A showing the draft angle of the sidewalls;
FIG. 5 is a graph showing the optimal width of the lateral grooves of the tire of FIG. **1**;
FIG. 6 is a graph showing the optimal range of angles the sweep path of the lateral groove forms with the lateral direction of the tire; and
FIG. 7 is graph showing the optimization of the Snow Traction and Dry Braking performance of a tire by using an appropriately sized lateral groove with chamfer for a tread block with a given sipe density.

### DETAILED DESCRIPTION OF PARTICULAR EMBODIMENTS

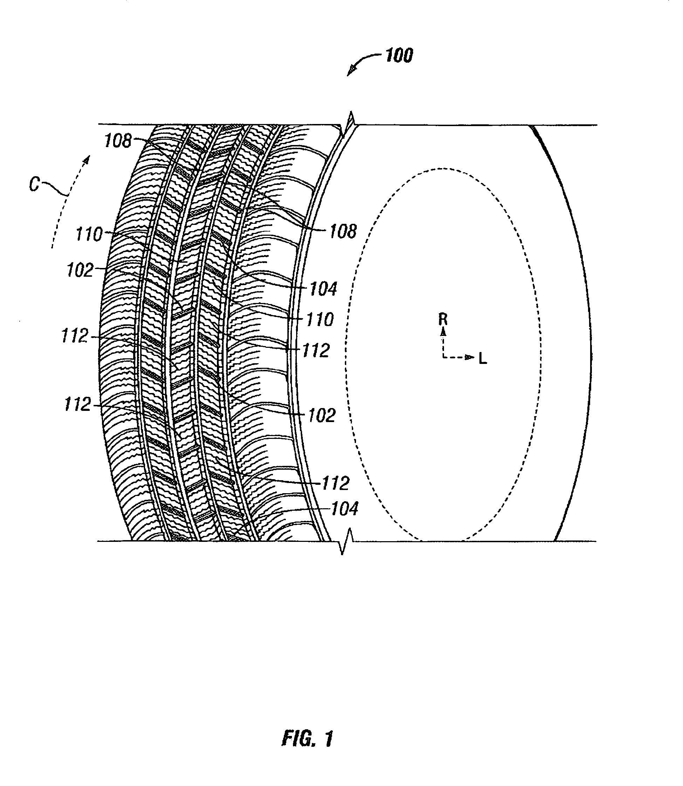

Looking at FIG. 1, a tire 100 with lateral grooves 102 that have chamfers 104 located where the grooves 102 intersect the circumference 106 of the tire is shown. The lateral grooves **102** are so called since they extend generally in the lateral or axial direction L of the tire, which is parallel with the axis of rotation of the tire. The tire **100** further comprises circumferential grooves **108** that extend generally in the circumferential direction C of the tire, which is the direction along which the tire rolls. They along with the lateral grooves **102,** form tread blocks **110** along the circumference 106 of the tire **100.** These grooves **102, 108** provide void within the tread for the consumption of water and snow to aid in wet and snow traction. Within each tread block **110,** there are four sipes 112 which are thin incisions that provide extra biting edges which also aid in the traction of the tire.

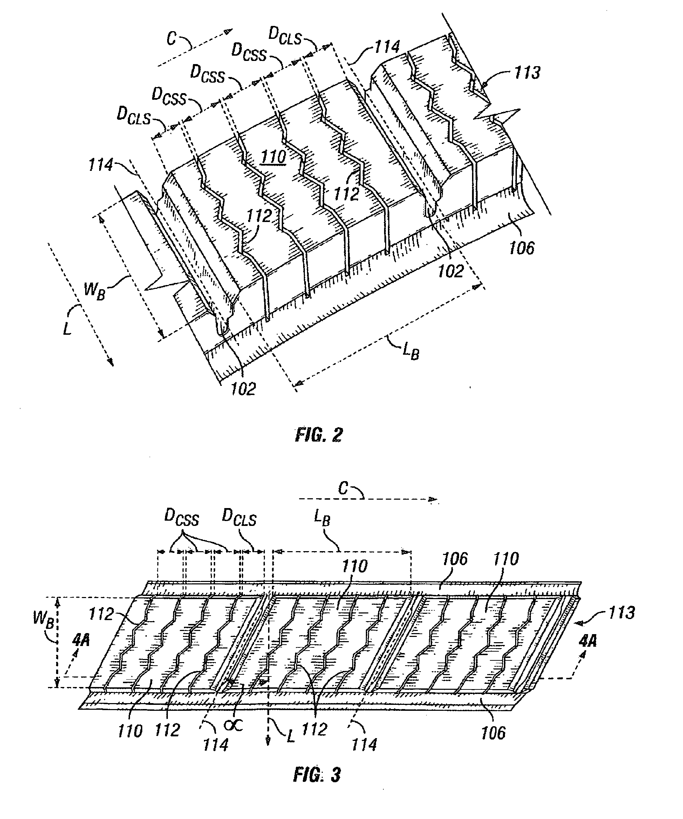

As best seen in FIGS. 2 and 3 for this particular embodiment, the size of the tire is 245/45R17 and the length L_{B} of the tread block **110** is 35 mm in the circumferential direction C of the tire and the width W_{B} of the block is 24 mm in the lateral direction L. The distance D_{CSS} from sipe to sipe in the circumferential direction **C** is 7 mm and the distance D_{CLS} from a lateral groove to a sipe in the circumferential direction C is also 7 mm. It is known that increasing the number of sipes **112** and lateral grooves **102** typically increases snow traction but may not increase other performances of the tire such as wear. Therefore, it is contemplated that other tread blocks having different dimensions and features could be used. For example, the length **L_{B}** of the tread block **110** could be 27 mm and it could have two sipes **112** such that the distance D_{CLS} from a lateral groove to a sipe or the distance D_{CSS} from a sipe to another sipe could be 9 mm. Alternatively, the distance D_{CSS} from a sipe to another sipe and the distance **D_{CLS}** from a sipe to a groove could be different from each other. Looking at tread blocks **110** found in the center rib **113** of the tire, it can be also be seen that the sweep axis or path **114** of the lateral groove **102** forms an angle α with lateral direction L of the tire.

While only one size of tire is shown herein, the Applicant believes based on experience that the dimensions and geometry of the lateral grooves and chamfers will work on any tire, including and not limited to passenger car and light truck tires and tires having different tread block and sipe configurations. Accordingly, these other tire sizes and configurations are considered to be within the scope of the present invention.

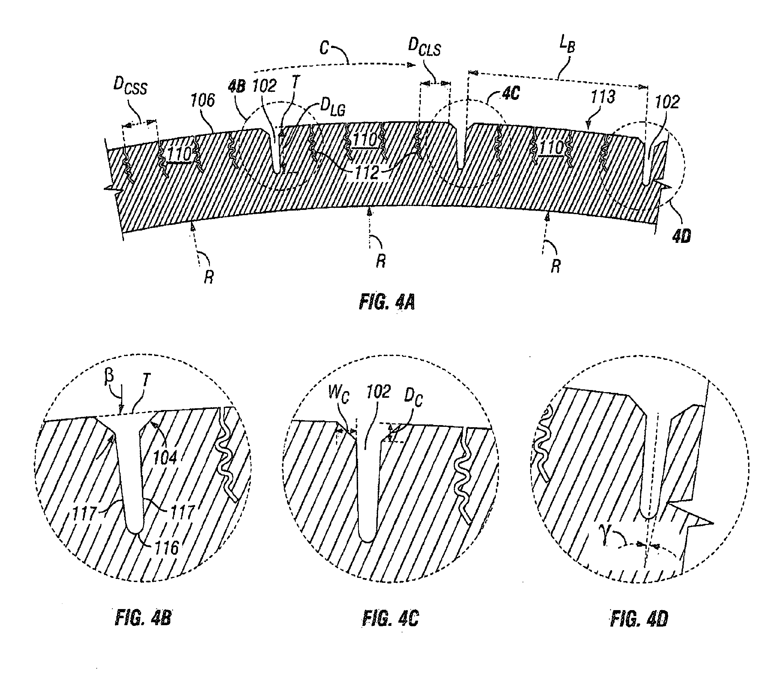

Focusing on the lateral grooves 102 and chamfers **104,** it can be seen in FIG. 4 that the lateral grooves **102** have a depth **D_{LG}** that is measured from the tangent T of the circumference **106** of the tire **100** to the bottom **116** of the groove **102** in the radial direction **R** of the tire. For this particular embodiment, the depth **D_{LG}** is 7 mm for all the lateral grooves **102** but it is contemplated that this depth could be more or less for some or all of the grooves. Likewise, the sidewalls **117** of the grooves 102 have a draft angle γ that is **2.5** degrees for both sidewalls of all the lateral grooves but it is contemplated that this draft angle could be more or less for some or all of the grooves. The lateral grooves **102** also have a width W_{LG} which is measured from the theoretical sharp corner of one side of the lateral groove **102** to the theoretical sharp corner of the other side of the groove. Turning specifically to the chamfers **104,** it can be seen that they form an angle **β** with the tangent **T** of the circumference of the tire. It is preferable if this angle **β** is 45 degrees as this is the optimal angle that allows the snow to enter and exit the groove **102** as the tire rolls into and out of the contact patch with the road: Also, the depth **D_{C}** and width **W_{C}** of the chamfers is 1.5 mm. However, it is contemplated that other angles **β,** such as 30 or 60 degrees, as well as other depths D_{C} and widths W_{C} of the chamfers, such as 1 or 3 mm, could be used as well.

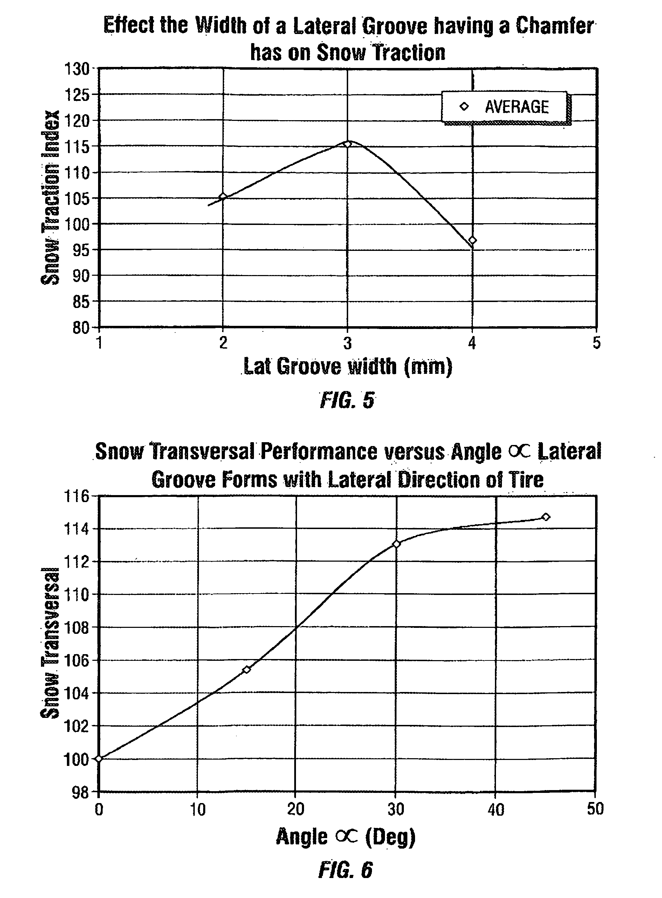

FIG. 5 is a graph that shows the optimal width W_{LG} of the lateral groove 102. Four days of testing were conducted to see how the width W_{LG} of the lateral groove 102 with chamfers **104** affected snow traction. The snow traction test shown in this figure is an analytical measurement of the tire Mu-Slip curve under driving torque provided by a testing machine. The testing protocol involves measuring the average Mu, which is the coefficient of friction, and it ranges typically between 20% and 300%. The track on which the testing was conducted is a soft snow track and the CTI penetrometer is between 75 and 80. The average of the results for all four days of testing has been plotted.

As can be seen, the average of the results for all four days showed some improvement in snow traction at a width W_{LG} of 2 mm. At a lateral groove width W_{LG} of approximately 2.6 mm the average results show a snow traction improvement of 10% which is significant. The most improvement in snow traction was experienced at a lateral groove width W_{LG} of approximately 3 mm where the average of the results indicated that there is a 15% improvement in snow traction. At a lateral groove width **W_{LG}** of approximately 3.6 mm there was still an average improvement of 5% and there was virtually no improvement in snow traction at a lateral groove width **W_{LG}** of approximately 4 mm. Accordingly, the lateral groove width **W_{LG}** should range from 2 to 4 mm and preferably ranges approximately from 2.6 to 3.6 mm and the optimal width is approximately 3 mm. It should be noted that the range of widths **W_{LG}** is critical as lateral grooves **102** outside these ranges actually decreases snow traction performance instead of improving it.

As mentioned earlier, the lateral grooves **102** may extend in directions other than in a purely axial or lateral direction L of the tire. In certain cases, the grooves **102** may extend in a substantially straight path as shown for the tread blocks of the center ribs in FIGS. **1** thru **3** but it is contemplated by the Applicant that the lateral grooves **102** may also zig-zag, undulate or move arbitrarily along a general sweep axis or path **114** and still fall within the scope of the present invention. FIG. 6 shows a graph that indicates what range of angles α**,** the sweep axis or path **114** of a lateral groove or grooves **102** may form with the lateral direction L of the tire **100** and still provide proper snow transversal traction. This test is a lap time test on a hard snow track with a CTI penetrometer reading of around **85.** Test results show that the angle α can range from 0 to 45 degrees. Therefore, it is to be understood that the term "lateral groove" within the scope of the present application including the claims includes any groove **102** whose sections follow a sweep path or axis **114** that forms an angle α with the lateral direction L of the tire 100 that falls within these ranges. Similarly, ranges are given for various variables within the present application and its claims and it is to be understood that the ranges are inclusive of the boundary values given.

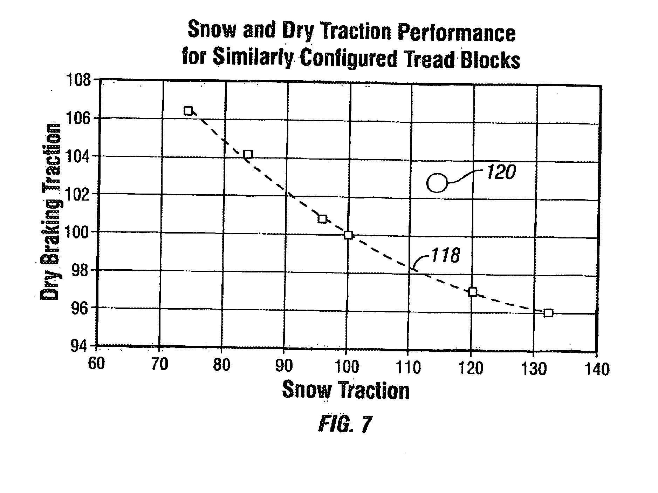

Finally turning to FIG. 7, the unexpected result that the snow and dry traction are both improved at the same time by an appropriately configured lateral groove with a chamfer according to the present invention is illustrated. The dotted line represents the typical performance curve **118** that shows the relationship that typically exists between snow traction and dry traction. This graph is based on data taken from a standard dry braking test, shown along the vertical axis of the graph, and data taken from a standard snow traction test as previously described, which is shown along the horizontal axis of the graph. The dry braking test is a vehicle test where the braking distance of the vehicle, which is mounted with the tires to be tested, is measured on a hard asphalt surface. As the sculpture of a tire is modified to improve dry braking, the tire performance usually moves up along the curve **118** and snow traction is not improved. For example, at a dry baking index of approximately 106, the snow traction index is approximately at 75. Conversely, as the sculpture of a tire is changed to improve snow traction, the tire performance moves down along the curve **118** and the dry braking performance is not improved. For example, at a snow traction index of approximately 132, the dry braking performance index is approximately 96. It should be noted that curve **118** is based on tire results that measured what effect sipe density had on dry braking and snow traction performances. These tires had no chamfers on their lateral grooves.

Particularly advantageous and unexpected is that the use of a lateral groove **102** with a width W_{LG} of approximately 3 mm and two chamfers **104** on either side of the groove allows both dry braking and snow traction performances to be improved simultaneously. This is represented on the graph by a data point 120 located above and to the right of the curve 118 that represents the typical dry braking and snow traction performances of a tire.

One theory of why lateral grooves with the appropriate width and chamfer or chamfers provide such critical and unexpected results is that they provide an improved way of capturing and releasing snow when the tire is used in a snowy environment. Specifically, when the chamfers and lateral grooves are properly sized and configured, the chamfers help the snow enter and exit the groove while the width of the groove helps to retain and expel the snow at the proper time. Also, it is preferred that a chamfer be used as opposed to a radius so that sharp edges are formed at the circumference of the tire, which allow the edge to effectively bite onto the road surface to improve snow traction once the snow has been received into the groove. However, the present invention is not limited to any particular theory but to the structure that provides these critical, surprising and unexpected results.

While this invention has been described with reference to particular embodiments thereof, it shall be understood that such description is by way of illustration and not by way of limitation. Accordingly, the scope and content of the invention are to be defined only by the terms of the appended claims.

## Claims

1. A tire with improved snow traction that has lateral and circumferential directions and an equatorial plane comprising a tread with a circumference (106) and at least one lateral groove (102) located thereon on each side of the equatorial plane having at least one chamfer found where the groove intersects the circumference of the tire along the majority of the sweep axis of said groove, said groove having a predetermined depth and width and sidewalls having predetermined draft angles, **characterized in that** the width of the groove is in the range of 2 to 4 mm, wherein the tire is a passenger car and light truck tire.

2. The tire of claim 1, wherein the width of the groove is in the range of 2.6 to 3.6 mm.

3. The tire of claim 2, wherein the width of the groove is approximately 3 mm.

4. The tire of claim 1, wherein the chamfer forms approximately a 45 degree angle with the tangent of the circumference of the tire.

5. The tire of claim 4, wherein the depth and width of the chamfer are both approximately 1.5 mm.

6. The tire of claim 1, wherein the depth of the groove is approximately 7 mm.

7. The tire of claim 1, wherein said groove comprises a second chamfer that is opposite of the first chamfer.

8. The tire of claim 1, wherein the tread comprises a plurality of lateral grooves.

9. The tire of claim 1, wherein lateral groove follows a substantially straight path.

10. The tire of claim 9, wherein the angle the lateral groove forms with the lateral direction of the tire is approximately 45 degrees.

11. The tire of claim 1, wherein the draft angles found on the sidewalls of the groove are between 0 and 15 degrees.

12. The tire of claim 1, wherein the size of the tire is 245/45R17.

13. The tire of claim 8, wherein the tire further comprises circumferential grooves, said lateral and circumferential grooves defining tread blocks (110) that are approximately 35 mm long in the circumferential direction of the tire.

14. The tire of claim 13, wherein the said tread blocks have four sipes (112) thereon, each of which is located approximately 7 mm from either another sipe or a lateral groove in the circumferential direction of the tire.

## Patentansprüche

1. Reifen mit verbesserter Zugkraft auf Schnee, der eine Seiten- und eine Umfangsrichtung und eine Äquatorialebene hat, umfassend eine Lauffläche mit einem Umfang (106) und wenigstens einer seitlichen Rille (102), die auf derselben auf jeder Seite der Äquatorialebene angeordnet ist, mit wenigstens einer Abschrägung, die zu finden ist, wo die Rille den Umfang des Reifens entlang des Großteils der Auslenkungsachse der Rille schneidet, wobei die Rille eine vorbestimmte Tiefe und Breite und Seitenwände mit vorbestimmten Freiwinkeln hat, **dadurch gekennzeichnet, dass** die Breite der Rille in dem Bereich von 2 bis 4 mm liegt, wobei der Reifen ein Personenkraftwagen- und Leichtlastkraftwagen-Reifen ist.

2. Reifen nach Anspruch 1, wobei die Breite der Rille in dem Bereich von 2,6 bis 3,6 mm liegt.

3. Reifen nach Anspruch 2, wobei die Breite der Rille ungefähr 3 mm beträgt.

4. Reifen nach Anspruch 1, wobei die Abschrägung ungefähr einen Winkel von 45 Grad mit der Tangente des Umfangs des Reifens bildet.

5. Reifen nach Anspruch 4, wobei die Tiefe und die Breite der Abschrägung beide ungefähr 1,5 mm betragen.

6. Reifen nach Anspruch 1, wobei die Tiefe der Rille ungefähr 7 mm beträgt.

7. Reifen nach Anspruch 1, wobei die Rille eine zweite Abschrägung umfasst, die der ersten Abschrägung gegenüberliegt.

8. Reifen nach Anspruch 1, wobei die Lauffläche mehrere seitliche Rillen umfasst.

9. Reifen nach Anspruch 1, wobei die seitliche Rille einer im Wesentlichen geraden Bahn folgt.

10. Reifen nach Anspruch 9, wobei der Winkel, den die seitliche Rille mit der Seitenrichtung des Reifens bildet, ungefähr 45 Grad beträgt.

11. Reifen nach Anspruch 1, wobei die an den Seitenwänden der Rille zu findenden Freiwinkel zwischen 0 und 15 Grad betragen.

12. Reifen nach Anspruch 1, wobei die Größe des Reifens 245/45R17 beträgt.

13. Reifen nach Anspruch 8, wobei der Reifen ferner umlaufende Rillen umfasst, wobei die seitlichen und die umlaufenden Rillen Profilblöcke (110) definieren, die in der Umfangsrichtung des Reifens ungefähr 35 mm lang sind.

14. Reifen nach Anspruch 13, wobei die Profilblöcke vier Lamellen (112) auf denselben haben, deren jede in der Umfangsrichtung des Reifens ungefähr 7 mm von einer anderen Lamelle oder eine seitlichen Rille entfernt angeordnet ist.

## Revendications

1. Pneu à traction sur neige améliorée ayant des directions latérale et circonférentielle et un plan équatorial comprenant une bande de roulement ayant une circonférence (106) et au moins une rainure latérale (102) située sur celle-ci de chaque côté du plan équatorial ayant au moins un chanfrein se trouvant là où la rainure coupe la circonférence du pneu le long de la majeure partie de l'axe de balayage de ladite rainure, ladite rainure ayant une profondeur et une largeur prédéterminées et des parois latérales ayant des angles de dépouille prédéterminés, **caractérisé en ce que** la largeur de la rainure est comprise dans l'intervalle de 2 à 4 mm, le pneu étant un pneu pour automobiles de tourisme et pour camions légers.

2. Pneu selon la revendication 1, dans lequel la largeur de la rainure est comprise dans l'intervalle de 2,6 à 3,6 mm.

3. Pneu selon la revendication 2, dans lequel la largeur de la rainure vaut approximativement 3 mm.

4. Pneu selon la revendication 1, dans lequel le chanfrein forme approximativement un angle de 45 degrés avec la tangente de la circonférence du pneu.

5. Pneu selon la revendication 4, dans lequel la profondeur et la largeur du chanfrein valent approximativement 1,5 mm chacune.

6. Pneu selon la revendication 1, dans lequel la profondeur de la rainure vaut approximativement 7 mm.

7. Pneu selon la revendication 1, dans lequel ladite rainure comprend un deuxième chanfrein qui est en face du premier chanfrein.

8. Pneu selon la revendication 1, dans lequel la bande de roulement comprend une pluralité de rainures latérales.

9. Pneu selon la revendication 1, dans lequel la rainure latérale suit un chemin substantiellement droit.

10. Pneu selon la revendication 9, dans lequel l'angle que forme la rainure latérale avec la direction latérale du pneu vaut approximativement 45 degrés.

11. Pneu selon la revendication 1, dans lequel les angles de dépouille présents sur les parois latérales de la rainure sont compris entre 0 et 15 degrés.

12. Pneu selon la revendication 1, dans lequel la taille du pneu est 245/45R17.

13. Pneu selon la revendication 8, dans lequel le pneu comprend en outre des rainures circonférentielles, lesdites rainures latérales et circonférentielles définissant des pavés (110) qui font approximativement 35 mm de long dans la direction de la circonférence du pneu.

14. Pneu selon la revendication 13, dans lequel lesdits pavés comportent quatre incisions (112), chacune d'entre elles étant située approximativement à 7 mm d'une autre incision ou d'une rainure latérale dans la direction de la circonférence du pneu.
